# EUROPÄISCHE PATENTSCHRIFT

(11) **EP 1 454 464 B1**
(45) Veröffentlichungstag und Bekanntmachung des Hinweises auf die Patenterteilung: **23.03.2005**
(21) Anmeldenummer: 02787370.2
(22) Anmeldetag: 18.11.2002
(51) Int. Cl.: H04L 12/58, H04M 3/533, H04L 29/06

(54) **SYSTEM ZUR UMSETZUNG VON TEXTDATEN IN EINE SPRACHAUSGABE**
SYSTEM FOR CONVERTING TEXT DATA INTO SPEECH OUTPUT
SYSTEME DE CONVERSION DE DONNEES TEXTUELLES EN SORTIE VOCALE

(30) Priorität: 11.12.2001 DE 10160673
(43) Veröffentlichungstag der Anmeldung: 08.09.2004
(73) Patentinhaber: Siemens Aktiengesellschaft, 80333 München (DE)
(72) Erfinder: NEUHAUS, Ralf, 44534 Lünen (DE)
(86) Internationale Anmeldenummer: PCT/DE2002/004243
(87) Internationale Veröffentlichungsnummer: WO 2003/055158

(56) Entgegenhaltungen:
- EP-A- 0 650 284
- EP-A- 1 113 631
- WO-A-01/57851

## Beschreibung

Die Erfindung betrifft ein System mit Anwendungen gemäß dem Oberbegriff des Anspruchs 1, die mittels eines Netzwerks miteinander verbunden sind, wobei Textdaten von mindestens einer Anwendung als Sprachdaten ausgebbar sind.

Es ist bekannt, in Form von Texten oder numerischen Werten vorliegende Informationen zur Ausgabe als Sprache in ein akustisches Signal umzuwandeln. Das ist beispielsweise dann erforderlich, wenn zur Ausgabe von Daten keine visuelle Möglichkeit besteht, also kein Bildschirm oder Display zur Verfügung steht, sondern lediglich ein Lautsprecher oder ein einfaches Telefon. Die Sprachausgabe numerischer Werte wird beispielsweise bei der Fernsprechauskunft verwendet, um dem Kunden die gewünschte Rufnummer mitzuteilen. Die auszugebende Information wird dazu zunächst in kleinstmögliche Informationseinheiten unterteilt. Mit Hilfe einer Tabelle oder eines Algorithmus' wird jede Informationseinheit in eine Silbe oder in eine Abfolge von Silben umgesetzt. Die zusammengesetzte Silbenfolge wird von einem Ausgabegerät in ein akustisches Signal gewandelt. Im Beispiel der Fernsprechauskunft wird das erzeugte Sprachsignal über das Fernsprechnetz an den Anrufer übertragen.

Ein anderes bekanntes Beispiel für die Umwandlung von Text in Sprache stellt die "E-Mail-To-Speech"-Funktion dar, mit der oftmals Dienste zur Verteilung elektronischer Post, die sog. E-Mail-Systeme, ausgerüstet sind. Dabei kann eine E-Mail von einem beliebigen Fernsprechanschluss aus "gelesen" werden, indem der Benutzer einen speziellen Anschluss des E-Mail-Servers anruft. Nach einer Authentifizierung wandelt ein im E-Mail-System vorgesehener Dienst den Text der E-Mail in Sprache um und "liest" dem Benutzer den Inhalt der E-Mail vor. Wenn die Umsetzung eine Analyse der Syntax umfasst - man spricht dabei auch vom "Parsing" - wird der Dienst zur Erstellung der Silbenfolge auch als "Parser" bezeichnet. Im Unterschied zu dem Dienst, der bei der Fernsprechauskunft benutzt wird, ist der im E-Mail-System benutzte Parser von einer höheren Komplexität, weil nicht nur einzelne Ziffern, sondern der komplette Wortschatz einer natürlichen Sprache umgesetzt und meist zusätzlich eine Satzmelodie ausgestaltet wird. Die Parser unterscheiden dabei oft zwischen _verschiedenen natürlichen Sprachen, haben also eine unterschiedliche "Aussprache" für Deutsch, Englisch, Französisch etc. und können darüber hinaus oft sogar zur Ausgabe wahlweise männliche, weibliche oder aber auch vom Benutzer selbst zuvor aufgesprochene Sprachmuster (Sprachsamples) verwenden. Zur Sprachausgabe, man sagt häufig auch zur "Synthese" der Sprache, werden in der Regel Geräte verwendet, die mit speziell programmierten DSPs (DSP = Digital Signal Processor) oder anderen speziell für diesen Zweck hergestellten Bauteilen ausgestattet sind.

Aus der US 6,263,051 B1 "System And Method For Voice Service Bureau" ist ein zentraler Dienst in einem Kommunikationsnetzwerk zur automatisierten Abwicklung von Telefonaten bekannt. Dabei erhält der zentrale Dienst über eine Datenschnittstelle, beispielsweise eine XML-Schnittstelle, alle relevanten Daten für ein durchzuführendes Telefongespräch. Danach baut dieser zentrale Dienst über eine Kommunikationsanlage eine Sprachverbindung zu einem Fernsprechteilnehmer auf und wickelt unter Zuhilfenahme einer Sprachausgabeeinrichtung ("T-T-S = Text to Speech Engine") eine interaktive Kommunikation mit dem Fernsprechteilnehmer ab. Je nach gewählter Rufnummer erreicht der zentrale Dienst dabei entweder schnurgebundene oder mobile Telefone (und damit natürliche Kommunikationspartner) oder aber Voice-Mail-Systeme, Anrufbeantworter oder ähnliche Maschinen, die an einer Fernsprechleitung angeschlossen sein können. Dabei erfolgt bei dem bekannten Verfahren die Sprachausgabe immer als akustisches Signal über eine Fernsprechleitung. Die Versorgung des zentralen Dienstes mit den für den nächsten Anruf benötigten Daten kann über verschiedene Wege, mithin über unterschiedliche Datenschnittstellen, erfolgen. Dabei stellt die bekannte Anordnung sozusagen ein "virtuelles Call-Center" dar, welches für einen bestimmten Anwendungszweck, beispielsweise zum Telefon-Banking, einen Kunden anruft, diesen per Sprachausgabe mit Informationen versorgt und dessen Tastatureingaben am Telefon speichert.

Die Druckschrift WO 01/57851 - Freeland et. al., "Speech System", zeigt eine Anordnung zur Ausgabe einer Textnachricht in Form von Sprache. Die hierbei gezeigte Anordnung ermöglicht dabei die Sprachausgabe mit einer Stimme, die der Stimme einer ausgewählten natürlichen Person angenähert ist. Dabei werden vorzugsweise die Stimmenprofile bekannter Persönlichkeiten zur Auswahl angeboten. Zur Sprachausgabe wird dann eine Textnachricht über ein Kommunikationsnetzwerk zu einem zentral angeordneten Dienst übertragen, welcher die Umwandlung der Textnachricht in synthetische Sprache vornimmt und die Sprachausgabe dann bei einem anderen, vorher spezifizierten Endgerät in dem Kommunikationsnetzwerk vornimmt.

Bei den gebräuchlichen Systemen zur Sprachausgabe textbasierter Informationen hat sich als nachteilig erwiesen, dass jedes Gerät oder jeder Dienst als spezielle Anwendungen zur Sprachausgabe textbasierender Informationen jeweils seine eigenen Einrichtungen, also Soft- und Hardware, zur Synthese und Ausgabe der Sprachdaten vorhalten muss.

Der Erfindung liegt somit die Aufgabe zugrunde, die Systeme zur Sprachausgabe textbasierter Informationen so zu verbessern, dass diese universeller einsetzbar sind.

Die Lösung dieser Aufgabe ist durch die im Anspruch 1 angegebenen Merkmale gegeben. Durch die Merkmale der Unteransprüche ist das System in vorteilhafter Weise weiter ausgestaltet.

Die Lösung dieser Aufgabe sieht vor, dass die Sprachausgabe gesteuert durch die Anwendung (1, 1c) auch als Übermittlung in Form von Sprachdaten zurück zu der Anwendung erfolgt.

Die Umwandlung der Textdaten in Sprachdaten kann an einer beliebigen Stelle in einem Netzwerk geschehen, wobei mindestens eine Anwendung eine Kommunikationsanlage ist und die Sprachdaten an einem Sprachendgerät ausgebbar sind oder als Datenpaket weiterleitbar sind.

Weitere Anwendungen, die den Dienst zur Umwandlung von Textdaten in Sprachdaten nutzen, können einem Netzwerk besonders einfach hinzugefügt werden, wenn Informationen über die Funktionen des Dienstes bei einem Verwaltungsserver abrufbar sind.

Das Abrufen von Informationen über die Funktionen des Dienstes ist besonders einfach und sicher, wenn die Informationen mit Hilfe eines Protokolls abrufbar sind.

Der Aufwand zur Administration eines Netzes aus Anwendungen und Diensten wird minimiert, wenn die Informationen die Adresse des Dienstes und/oder Angaben über die Art und Weise seiner Nutzung umfassen.

Die Anpassung der Anwendungen zum Zugriff auf den Dienst vereinfacht sich, wenn auf dem Verwaltungsserver Programmteile zur Verwendung des Dienstes zur Verfügung stehen.

Wenn ein Dienst neu in einem Netzwerk gestartet wird, kann dieser von den Anwendungen ohne Eingriff in die Anwendungen oder Neustart der Anwendungen benutzt werden, indem der Dienst Verbindungen zu den Anwendungen herstellt und diesen Informationen über seine Funktionen übermittelt.

Wenn der Dienst genutzt wird, um Fehler in einem Netzwerk an ein Netzwerk-Administrator zu melden, kann auch bei Abwesenheit des Netzwerk-Administrators die Funktionsfähigkeit des Netzwerks schnell wieder hergestellt werden.

Ein Ausführungsbeispiel des Systems wird nachfolgend anhand der Zeichnung beschrieben. Die einzige Figur zeigt dabei zwei Netzwerke mit einem Server, auf dem ein Dienst zur Umwandlung von Text in Sprachdaten installiert ist.

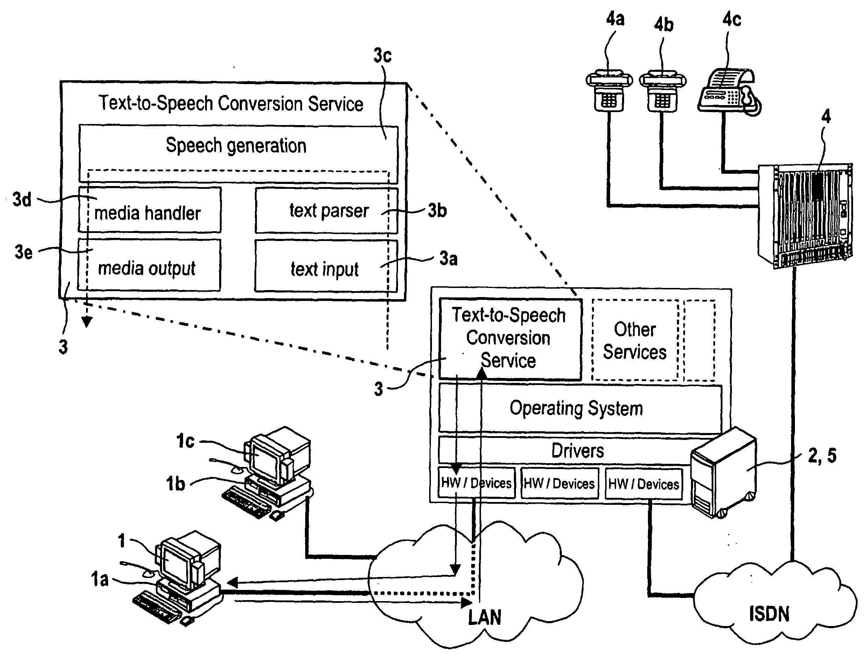

In der Figur Fig. 1 ist ein PC 1a gezeigt, auf dem eine Anwendung (Anwendungsprogramm) 1 installiert ist.

Die Anwendung 1 soll beispielhaft eine E-Mail per Sprachausgabe ausgeben. Sie baut dazu über ein Netzwerk LAN eine Verbindung zu einem Dienstserver 2 auf, auf dem ein Text-To-Speech-Dienst 3 installiert ist. Mit Hilfe eines speziellen Protokolls überträgt die Anwendung 1 den auszugebenden Text sowie einen Satz Steuerkommandos zum Text-To-Speech-Dienst 3.

Die Steuerkommandos umfassen Angaben darüber, wohin und wann soll die Ausgabe erfolgen, wie soll im Falle eines Nichterfolgs vorgegangen werden und mit welcher Stimme soll die Ausgabe erfolgen. Als Ausgabeziele sind beispielsweise eine Rückgabe als Sprachdatenpaket oder die Ausgabe als Sprachsignal im B-Kanal in einer bestehenden oder in einer neu aufzubauenden Verbindung auswählbar.

Im vorliegenden Beispiel soll die Ausgabe mit Hilfe der am PC 1a angeschlossenen Lautsprecher erfolgen, so dass im Steuerkommando die Rückgabe als Sprachdatenpaket ausgewählt wird. Als Ausgabezeitpunkt wird die Einstellung "sofort" gewählt, also unmittelbar nach der Umwandlung. Für eine spätere Ausgabe sieht das Protokoll die Übertragung zu beliebigen Zeitpunkten vor.

Die Anweisung, wie im Falle eines Nichterfolgs vorgegangen werden soll, ist besonders bei der Ausgabe über den B-Kanal einer neu aufzubauenden Fernsprechverbindung wichtig. Es kann vorkommen, dass der anzuwählende Teilnehmer das "Gespräch" nicht entgegennimmt oder der Anschluss besetzt ist. Für solche Fälle bietet das Protokoll die Möglichkeit, die Anzahl und den Zeitabstand von Wiederholungen der Ausgabe einzugeben.

Die Kommandos zur Auswahl der Stimme erlauben eine Auswahl zwischen "männlich", "weiblich" oder "basierend auf eigenen Sprachsamples". Ferner ist die Auswahl unter verschiedenen Nationalsprachen wie Deutsch, Englisch, Französisch etc. möglich. Im vorliegenden Beispiel benutzt die Anwendung 1, also das auf dem PC 1a installierte E-Mail-Programm, Informationen über den Verfasser der E-Mail, die im Adressverzeichnis des E-Mail-Systems enthalten sind, um Geschlecht und Nationalsprache der Sprachausgabe einzustellen, beispielsweise männlich und deutsch.

Nachdem der Text-To-Speech-Dienst 3 über die Textdaten und alle zur Umwandlung notwendigen Informationen verfügt, wandelt er den über das Textinterface 3a empfangenen Text mit Hilfe des Textparsers 3b in eine Silbenfolge um und formt im Sprachgenerator 3c mit Hilfe vorgespeicherter Sprachsamples einen Sprachdatensatz mit akustischen Informationen. Dieser Sprachdatensatz wird von einem Media-Handler 3d in das durch die Steuerkommandos vordefinierte Format umgesetzt und mit Hilfe der Ausgabefunktion Media-Output 3e über eine Verbindung im Netzwerk LAN zum PC 1a übertragen. Dort werden die Sprachdaten von der Anwendung 1 zwischengespeichert und dann über die Lautsprecher des PCs 1a ausgegeben.

Um den Text-To-Speech-Dienst 3 in der zuvor beschriebenen Weise nutzen zu können, besitzt die Anwendung 1 Informationen über die Adresse des Dienstes 3 und über die Fähigkeiten dieses Dienstes 3, also die im Protokoll nutzbaren Steuer-Kommandos,. Hierzu hinterlegt der Text-To-Speech-Dienst 3 bei seinem Start seine Leistungsmerkmale an einer dafür eingerichteten Stelle im Netzwerk, einem sog. "Look-Up-Service". Dies ist beispielsweise aus JINI (Java Intelligent Network Infrastructure) und UPnP (Microsoft Universal Plug and Play) bekannt; hier im Beispiel wird eine proprietäre Lösung benutzt. Die im Look-Up-Service zur Verfügung gestellten Informationen umfassen die Information darüber, dass ein Text-To-Speech-Dienst 3 zur automatischen Umwandlung von übermittelten Texten in eine Sprachausgabe vorhanden ist, Angaben darüber, wie viele Ressourcen zur Verfügung stehen, Angaben über die unterstützen Sprachen, Informationen darüber, unter welcher Adresse im Netzwerk LAN, ISDN und auf welchem Weg der Text-To-Speech-Dienst 3 benutzt wird, Angaben über Zusatzfunktionen und schließlich Informationen darüber, wie der Text-To-Speech-Dienst 3 zu benutzen ist. Im Beispiel werden die umzuwandelnden Texte im XML-Format (= extended markup language) übertragen, da hier bereits der gewählte Zeichensatz (und damit die Nationalsprache) und die Strukturinformationen mitübergeben werden. Selbstverständlich können auch andere Textformate übergeben werden.

Alternativ zur beschriebenen Registrierung bei einem "Look-Up-Service" kann der Text-To-Speech-Dienst 3 auch nach seinem Start oder in vorbestimmten Zeitintervallen aktiv im Netzwerk LAN nach Anwendungen suchen, die einen solchen Dienst 3 verwenden können, und sich aktiv bei diesen Anwendungen 1 anmelden.

Weiter zeigt die Figur an einer Kommunikationsanlage 4 angeschlossene Endgeräte 4a, 4b, 4c. Die Kommunikationsanlage 4 ist ein leitungsvermittelndes ISDN-Vermittlungssystem, es kann aber auch eine Kommunikationsanwendung in einer VoIP-Kommunikationsanordnung (Sprache-über-Datennetz-Kommunikationsanordnung; VoIP = Voice over IP; IP = Internet Protocol) sein.

Nach der Anwendung 1 wird nun vom Endgerät 4a aus eine textbasierte Kurzmitteilung (SMS - Short Message Service) zum Endgerät 4b verschickt. Die Kommunikationsanlage 4, die hier in verallgemeinertem Sinne als eine weitere Anwendung gilt, die sich technisch von der Anwendung 1 unterscheidet, leitet textbasierte Kurzmitteilungen nur an solche Endgeräte 4a, 4c weiter, die in der Teilnehmertabelle der Kommunikationsanlage 4 als "textfähige" Engeräte bekannt sind. Da das Endgerät 4b kein_alphanumerisches Display zur Ausgabe von Textnachrichten besitzt, ist eine Sprachausgabe erforderlich. Die Kommunikationsanlage 4 baut in der gleichen Weise wie die Anwendungen 1, 1c eine Verbindung zu einem auf einem Verwaltungsserver 5 installierten Look-Up-Service auf und fragt die Adressen und Fähigkeiten des verfügbaren Text-To-Speech-Dienstes 3 zur Umwandlung von Textdaten in Sprachdaten ab. Im vorliegenden Beispiel dient der Dienstserver 2 gleichzeitig als Verwaltungsserver 5. Der Text-To-Speech-Dienst 3 verfügt wie gewünscht über die Fähigkeit zur Sprachausgabe einer Kurzmitteilung (SMS). Gemäß der vom Look-Up-Service gewonnen Informationen generiert die Kommunikationsanlage 4 nun eine den umzuwandelnden Text umfassende Anfrage, die demjenigen Protokoll genügt, welches vom Text-To-Speech-Dienst 3 zum Empfang von Aufträgen verwendet wird. Die Anfrage mit der Textnachricht wird dann zum Dienstserver 2 übertragen, dort vom Zwischenspeicher 3a des Dienstes 3 entgegengenommen, an den Parser 3b weitergeleitet, von diesem in eine der Syntax des Textes entsprechende Silbenfolge umgewandelt und vom Sprachgenerator 3c in eine Sprachdatenfolge umgesetzt. Der Media-Handler 3d bereitet die Sprachdaten zur Ausgabe in dem Format vor, welches zur Ausgabe über den B-Kanal einer Fernsprechverbindung verwendet wird. Das Ausgabemodul 3e baut nun eine Fernsprechverbindung zur Kommunikationsanlage 4 auf und wählt dabei direkt den Teilnehmer 4b an. Nach der Entgegennahme des Gespräches am Endgerät 4b werden die Sprachdaten dann abgespielt.

Anstelle der Kommunikationsanlage 4 kann auch ein entsprechend ausgestattetes Endgerät 4a, 4c direkt eine Textnachricht zur Sprachausgabe an den Dienst 3 weiterleiten, ohne dass die Kommunikationsanlage 4 die Fähigkeiten zur Kommunikation mit dem Verwaltungsserver 5 und dem Dienstserver 2 aufweisen muss.

## Patentansprüche

1. System zur Ausgabe von Textdaten als Sprache,
mit Anwendungen (1, 1c), die mittels eines Netzwerks miteinander verbunden sind,
mit einem vorgesehenen Dienst (3) zur Umsetzung von Textdaten in eine Sprachausgabe, der durch mindestens zwei Anwendungen (1, 1c) nutzbar ist, wobei die Sprachausgabe zumindest als Übertragung eines akustischen Signals über eine Fernsprechverbindung erfolgen kann,
**dadurch gekennzeichnet, dass**
- das System einen Verwaltungsserver aufweist, der zur Speicherung von Informationen über die Adresse und über die nutzbaren Steuerkommandos des Dienstes (3) ausgebildet ist,
- die Anwendungen (1, 1c) zum Abruf der Informationen bei dem Verwaltungsserver ausgebildet sind,
- die Anwendungen (1, 1c) zur Erstellung von Steuerkommandos anhand der abgerufenen Informationen und zur Übertragung der Textdaten und der Steuerkommandos zu dem Dienst (3) ausgebildet sind, und
- der Dienst zur Umsetzung der übertragenen Textdaten in die Sprachausgabe in Form von Sprachdaten und die Übermittlung dieser Sprachdaten zu den Anwendungen (1, 1c) ausgebildet ist.

2. System nach Anspruch 1,
**dadurch gekennzeichnet,**
**dass** mindestens eine Anwendung eine Kommunikationsanlage (4) ist und die Sprachdaten an einem Sprachendgerät (4a, 4b) ausgebbar sind oder als Datenpaket weiterleitbar sind.

3. System nach Anspruch 1 oder 2,
**dadurch gekennzeichnet,**
**dass** der Verwaltungsserver derart ausgestaltet ist
**dass** die Informationen mit Hilfe eines Protokolls abrufbar sind.

4. System nach einem der vorhergehenden Ansprüche,
**dadurch gekennzeichnet,**
**dass** der Verwaltungsserver derart ausgestaltet ist
**dass** die Informationen Angaben über die Art und Weise der Nutzung des Dienstes (3) umfassen.

5. System nach einem der vorhergehenden Ansprüche,
**dadurch gekennzeichnet,**
**dass** auf dem Verwaltungsserver (5) Programmteile zur Verwendung des Dienstes (3) zur Verfügung stehen.

6. System nach einem der vorhergehenden Ansprüche,
**dadurch gekennzeichnet,**
**dass** der Dienst (3) ausgestaltet ist, dass er Verbindungen zu den Anwendungen (1, 1c) herstellt und diesen Informationen über seine Funktionen übermittelt.

7. System nach einem der vorhergehenden Ansprüche,
**dadurch gekennzeichnet,**
**dass** der Dienst (3), ausgestaltet ist um Fehler in einem Netzwerk an einen Netzwerk-Administrator zu melden.

8. System nach einem der vorhergehenden Ansprüche,
**dadurch gekennzeichnet,**
**dass** die mindestens zwei Anwendungen (1, 1c) unterschiedliche Anwendungen (1, 1c) sind.

## Claims

1. System for outputting text data in the form of speech,
having applications (1, 1c) which are connected to one another by means of a network,
having a provided service (3) for converting text data into speech output which can be used by at least two applications (1, 1c), the speech output being able to be effected at least in the form of transmission of an audio signal via a telephone connection,
**characterized in that**
- the system has a management server which is designed to store information about the address and about the usable control commands in the service (3),
- the applications (1, 1c) are designed to retrieve the information from the management server,
- the applications (1, 1c) are designed to create control commands using the retrieved information and to transmit the text data and the control commands to the service (3), and
- the service is designed to convert the transmitted text data into the speech output in the form of speech data and to transmit these speech data to the applications (1, 1c).

2. System according to Claim 1,
**characterized**
**in that** at least one application is a communication installation (4) and the speech data can be output on a voice terminal (4a, 4b) or can be forwarded as a data packet.

3. System according to Claim 1 or 2,
**characterized**
**in that** the management server is designed in such a way that the information can be retrieved using a protocol.

4. System according to one of the preceding claims,
**characterized**
**in that** the management server is designed in such a way that the information comprises details about the manner in which the service (3) is used.

5. System according to one of the preceding claims,
**characterized**
**in that** program parts for using the service (3) are available on the management server (5).

6. System according to one of the preceding claims,
**characterized**
**in that** the service (3) is designed to set up connections to the applications (1, 1c) and to send these applications information about its functions.

7. System according to one of the preceding claims,
**characterized**
**in that** the service (3) is designed to report faults in a network to a network administrator.

8. System according to one of the preceding claims,
**characterized**
**in that** the at least two applications (1, 1c) are different applications (1, 1c).

## Revendications

1. Système pour la sortie de données textuelles sous forme vocale,
avec des applications (1, 1c) qui sont reliées entre elles au moyen d'un réseau,
avec un service (3) prévu pour la conversion de données textuelles en une sortie vocale, lequel service est utilisable par au moins deux applications (1, 1 c), la sortie vocale pouvant s'effectuer au moins comme transmission d'un signal acoustique par l'intermédiaire d'une liaison téléphonique,
**caractérisé par le fait que**
- le système comporte un serveur administrateur qui est conçu pour mémoriser des informations sur l'adresse et sur les instructions de commande utilisables du service (3),
- les applications (1, 1c) sont conçues pour demander des informations au serveur administrateur,
- les applications (1, 1 c) sont conçues pour élaborer des instructions de commande à l'aide des informations demandées et pour transmettre les données textuelles et les instructions de commande au service (3), et
- le service est conçu pour convertir les données textuelles transmises en une sortie vocale sous la forme de données vocales et pour transmettre ces données vocales aux applications (1, 1c).

2. Système selon la revendication 1,
**caractérisé par le fait qu'**au moins une application est une installation de communication (4) et que les données vocales peuvent être délivrées à un terminal vocal (4a, 4b) ou peuvent être retransmises comme paquet de données.

3. Système selon la revendication 1 ou 2,
**caractérisé par le fait que** le serveur administrateur est conçu de telle sorte que les informations peuvent être demandées à l'aide d'un protocole.

4. Système selon l'une des revendications précédentes,
**caractérisé par le fait que** le serveur administrateur est conçu de telle sorte que les informations comprennent des indications sur la manière d'utiliser le service (3).

5. Système selon l'une des revendications précédentes,
**caractérisé par le fait que** des parties de programmes pour l'utilisation du service (3) sont disponibles sur le serveur administrateur (5).

6. Système selon l'une des revendications précédentes,
**caractérisé par le fait que** le service (3) est conçu de telle sorte qu'il établit des liaisons vers les applications (1, 1c) et qu'il transmet à celles-ci des informations sur ses fonctions.

7. Système selon l'une des revendications précédentes,
**caractérisé par le fait que** le service (3) est conçu pour signaler des erreurs dans un réseau à un administrateur de réseau.

8. Système selon l'une des revendications précédentes,
**caractérisé par le fait que** les deux ou plus applications (1, 1 c) sont des applications différentes (1, 1c).
